# EUROPEAN PATENT APPLICATION

(11) **EP 3 192 946 A1**
(43) Date of publication of application: **19.07.2017**
(21) Application number: 15840477.2
(22) Date of filing: 28.08.2015
(51) Int. Cl.: E04H 9/02, F16F 7/00, F16F 15/04

(54) **INTER-MEMBER CONNECTING STRUCTURE**

(30) Priority: 09.09.2014 JP 2014183604; 07.01.2015 JP 2015001717; 18.08.2015 JP 2015161134
(71) Applicant: Ideal Brain Co., Ltd., Tokyo 101-0063 (JP)
(72) Inventor: SATO, Takanori, Tokyo 154-0002 (JP)
(74) Representative: Rings, Rolf
(86) International application number: PCT/JP2015/004350
(87) International publication number: WO 2016/038834

(57) **Abstract**

In order to provide a damper set capable of absorbing vibration energy of a strong earthquake.

An inter-element joint structure introduced into a constructional structure includes a first member 61 and provided with a horizontal long hole 61a or a horizontal long trench 61b extending in an in-plane horizontal direction at a predetermined length, a second member 33 installed in a panel 31 of the constructional structure, a bushing member 62 fitted to a through-hole 33c formed in the second member 33 and fixed while it comes into contact with a surface of the first member 61, and a fastening member having at least a bolt 63 provided with a shank penetrating the bushing member 62 and the horizontal long hole 61a and the horizontal long trench 61b of the first member 61 to fasten them. The bushing member 62 has a thickness larger than that of the second member 33.

## Description

### Technical Field

The present invention relates to an inter-element joint structure introduced into a constructional structure.

### Background Art

In the background art, a vibration control mechanism has been proposed in Patent Literature 1, capable of effectively absorbing high vibration energy of a strong earthquake or the like and preventing damage in a structural member of a building.

In the vibration control mechanism discussed in Patent Literature 1, bending elements of a pair of frame members are connected in an approximately X-shape by interposing a friction damper to form the vibration control mechanism, and upper and lower connection plates of the frame members are fixed to a base or a beam, so that a straight timber is fixed to the column. As a result, using the vibration control mechanism discussed in Patent Literature 1, vibration energy is absorbed by a friction damper when a strong earthquake or the like occurs. In addition, a collapse or sinking of the column is prevented.

### Citation List

### Patent Literature

Patent Literature 1: JP 2001-336303 A

### Summary of Invention

### Technical Problem

However, in the vibration control mechanism discussed in Patent Literature 1, a frame member provided with a pair of bending elements is employed. By virtue of a pressing force applied toapairof framemembers, a frictional resistance of the friction damper is used. Therefore, when a pressing force applied to a pair of frame members becomes insufficient, vibration energy is not sufficiently absorbed, and a building may collapse disadvantageously.

The vibration control mechanism discussed in Patent Literature 1 uses a pressing force applied to the frame member from a pair of bending elements. Therefore, if no bracing member is provided in a building, it is difficult to apply the vibration control mechanism. Therefore, it is difficult to sufficiently absorb vibration energy caused by a strong earthquake or the like, and a building may collapse disadvantageously.

Even when a bracing member is provided in a building, application of the vibration control mechanism discussed in Patent Literature 1 is limited to a position where the bracing member is provided. Therefore, the vibration control mechanism of Patent Literature 1 fails to sufficiently absorb vibration energy, and a building may collapse disadvantageously.

In view of the aforementioned problems, it is therefore an object of the present invention to provide an inter-element joint structure capable of sufficiently absorbing vibration energy caused by a strong earthquake or the like.

### Solution to Problem

An inter-element joint structure according to the present invention includes: a first member provided with a hole or a trench; a second member provided with a through-hole; a bushing member fitted to the through-hole formed in the second member and fixed to the second member while the bushing member comes into contact with a surface of the first member; a fastening member including a bolt provided with a shank penetrating at least the bushing member and the hole or the trench of the first member to fasten the bushing member and the first member; and a washer that is interposed between a head of the bolt and the bushing member and has a diameter larger than that of the bushing member, wherein the bushing member has a thickness larger than that of the second member, and the through-hole of the second member has a circumferential edge loosely fitted between the washer and the first member.

An inter-element joint structure according to the present invention includes: a first member provided with a hole; a second member provided with a through-hole and fixed to a constructional structure in advance of the first member; a bushing member that is fitted to the through-hole formed in the second member and comes into contact with a surface of the first member; and a fastening member including a bolt provided with a shank penetrating at least the bushing member and the hole of the first member to fasten the bushing member and the first member, wherein a relationship "t > α" is satisfied, where "α" denotes a gap between the first and second members, and "t" denotes a thickness of the bushing member.

An inter-element joint structure according to the present invention includes: a first member provided with a first through-hole; a second member provided with a second through-hole and fixed to a constructional structure in advance of the first member; a first bushing member fitted to the first through-hole formed in the first member; a second bushing member that is fitted to the second through-hole of the second member and comes into contact with a surf ace of the first bushingmember; and a fastening member including a bolt provided with a shank penetrating at least each hole of the first and second bushing members to fasten the first and second bushing members.

An inter-element joint structure according to the present invention includes : a first member provided with a hole; a second member provided with a through-hole and fixed to a constructional structure in advance of the first member; a bushing member that has a diameter smaller than that of the through-hole formed in the second member, is fitted to the through-hole of the second member, and comes into contact with a surface of the first member; and a fastening member including a bolt provided with a shank penetrating at least the bushing member and a hole of the first member to fasten the bushing member and the first member, wherein a circumferential edge of the bushing member expands outward by the fastening force of the fastening member so as to approach or come into contact with an inner circumferential surface of the through-hole.

An inter-element joint structure according to the present invention includes : a second member provided with a through-hole; a first member provided with a hole and fixed to a constructional structure in advance of the second member; a bushing member that has a diameter smaller than that of the through-hole formed in the second member, is fitted to the through-hole, and comes into contact with a surface of the first member; and a fastening member including a bolt provided with a shank penetrating at least the bushing member and a hole of the first member to fasten the bushing member and the first member, wherein a circumferential edge of the bushing member expands outward by the fastening force of the fastening member so as to approach or come into contact with an inner circumferential surface of the through-hole.

### Advantageous Effects of Invention

According to the present invention having the aforementioned configuration, when an earthquake vibration is applied to a constructional structure, the panel is displaced relatively to the wall frame in a horizontal direction. In other words, the panel is vibrated and displaced in an in-plane direction. In this case, the panel, the second member connected to the panel, and the bushing member fitted to the second member are displaced relative to the first member connected to the wall frame. In practice, a shank of the bolt inserted into the through-hole of this bushing member is reciprocatingly vibrated inside the horizontal long hole of the first member in the horizontal direction in response to an earthquake. In this case, although the bushing member is pressed to the surface of the first member, the bushing member slides on the surface of the first member in response to a horizontal displacement inside the horizontal long hole caused by the shank of the bolt. That is, the bushing member alternatingly slides forward and backward with respect to the paper plane while it is pressed to the first member. As a result, friction is applied between the surface of the first member and the bushing member pressed to the first member. In addition, in response to this friction, vibration energy caused by an earthquake is absorbed by the friction damping effect.

### Brief Description of Drawings

Fig. 1 is a diagram illustrating a vibration control wall structure provided with a joint structure according to a first embodiment of the invention.
Figs. 2(a) and 2(b) are diagrams for describing a panel included in the vibration control wall structure in details.
Figs. 3 (a) and 3(b) are diagrams for describing an inter-panel mount structure of the vibration control wall structure.
Fig. 4 is a front view illustrating a joint structure according to a first embodiment of the invention.
Fig. 5 is a cross-sectional view illustrating the joint structure according to the first embodiment of the invention.
Fig. 6 is a perspective view illustrating an inter-element joint structure according to second and third embodiments of the invention.
Fig. 7 is a side view illustrating the inter-element joint structure according to the second embodiment of the invention.
Fig. 8 is a diagram illustrating the inter-element joint structure according to the second embodiment of the invention when a thickness of a bushing member increases.
Fig. 9 (a) is a plan view illustrating the joint structure as seen from the top.
Fig. 9(b) is a diagram illustrating the bushing member having, for example, a rectangular planar shape.
Fig. 10 is a diagram illustrating an exemplary bushing member having a two-layer structure.
Fig. 11 is a diagram illustrating an exemplary female thread formed inside the bushing member to which a shank of the bolt can be screwed.
Fig. 12 is a diagram for describing a first bushing member fitted to a first member and a second bushing member fitted to a second member when the first and second bushing members abut on each other.
Fig. 13 is a diagram illustrating an inter-element joint structure according to the second embodiment of the invention when the inter-element joint structure is applied to a structure provided with a glass panel.
Fig. 14 is a side view illustrating an inter-element joint structure according to the third embodiment of the invention.
Fig. 15 is a side view illustrating the inter-element joint structure according to the third embodiment of the invention in details.
Fig. 16 is a diagram illustrating behaviors α and β plotted on a load-deformation curve.
Figs. 17(a) and 17(b) are diagrams for describing functional effects of the inter-element joint structure according to the present invention.
Fig. 18 is a diagram illustrating an exemplary case where the first member is installed in a column in advance.
Fig. 19 is a diagram illustrating an application of the structure of Fig. 7, in which a web provided with the first members as upper and lower flanges is mounted to the column.
Figs. 20(a) and 20(b) are diagrams illustrating an exemplary bushing member having a two-layer structure.
Figs. 21(a) and 21(b) are diagrams illustrating an exemplary structure in which a hole of the first member has a diameter larger than that of a through-hole of the bushing member.
Fig. 22 is a diagram for describing another example of the joint structure according to the third embodiment of the invention.
Fig. 23 is an enlarged perspective view illustrating a bushing member according to another example of Fig. 22.
Figs. 24(a) and 24(b) are diagrams for describing functional effects of the joint structure according to another embodiment of the invention.
Figs. 25 (a) and 25 (b) are diagrams illustrating a bushing member provided with an apex portion harder than its body by applying quenching treatment at least to the apex portion.
Fig. 26 is a diagram illustrating a joint structure according to another embodiment of the invention, in which the first member is mounted to the column in advance.
Figs. 27(a) and 27(b) are diagrams for describing a modification of the bushing member according to another example of Fig. 22.
Fig. 28 is a perspective view illustrating the inter-element joint structure according to the third embodiment of the invention when it is used to joint the columns.
Fig. 29 is a cross-sectional side view illustrating the inter-element joint structure according to the third embodiment of the invention when it is used to joint the columns.

### Description of Embodiments

### First Embodiment

An inter-element joint structure 200 according to an embodiment of the present invention will now be described in details with reference to the accompanying drawings.

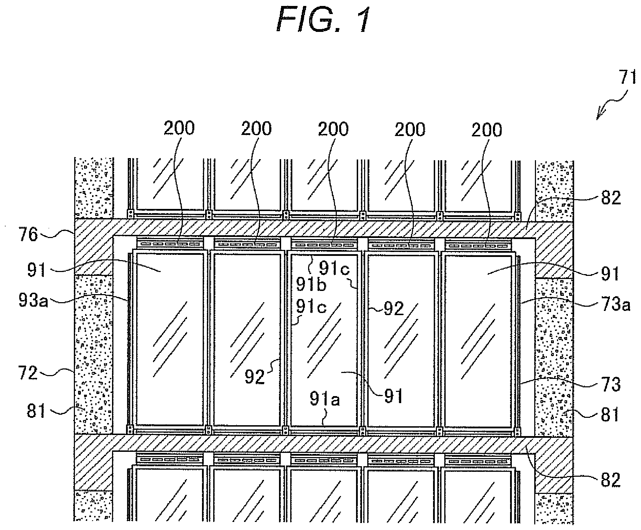

The joint structure 200 according to the present invention is applied to a vibration control wall structure 71 illustrated in Fig. 1. This vibration control wall structure 71 is introduced into a wall portion 76 of a building. The vibration control wall structure 71 includes a wall frame 72 provided in the wall portion 76, a damping wall assembly 73 provided in the wall frame 72, and a joint structure 200 provided between the wall frame 72 and the damping wall assembly 73.

The wall frame 72 is constructed of a structural member serving as a base of a structural strength of a building and the like. The wall frame 72 includes a plurality of columns 81 provided at a predetermined interval in a horizontal direction of the building, and a plurality of beams 82 provided at a predetermined interval in a vertical direction of a building. A plurality of columns 81 and a plurality of beams 82 are assembled with each other to open the wall portion 76 of the building in an approximately rectangular shape.

The damping wall assembly 73 is constructed as, for example, a glass curtain wall that does not burden a structural strength of the building. Alternatively, the damping wall assembly 73 may be constructed of a structural member serving as a base of the structural strength of the building or the like. The damping wall assembly 73 is provided by connecting a plurality of panels 91 in a lateral direction of damping wall assembly 73 set in parallel to the horizontal direction of the building inward of the wall frame 72 opened in an approximately rectangular shape.

The panel 91 may include a single-layered or multi-layered glass plate, a steel plate, a shutter, or the like having an approximately rectangular shape. A lower end 91a and both side ends 91c of the panel 91 are fixed using a frame 92 of the damping wall assembly 73, so that neighboring panels 91 are connected to each other in a lateral direction of the damping wall assembly 73. Alternatively, an upper end 91b and both side ends 91c of the panel 91 may also be fixed in three sides using the frame 92 of the damping wall assembly 73. In the following example, a case where the panel 91 is formed as a single-layered glass plate will be described by way of example.

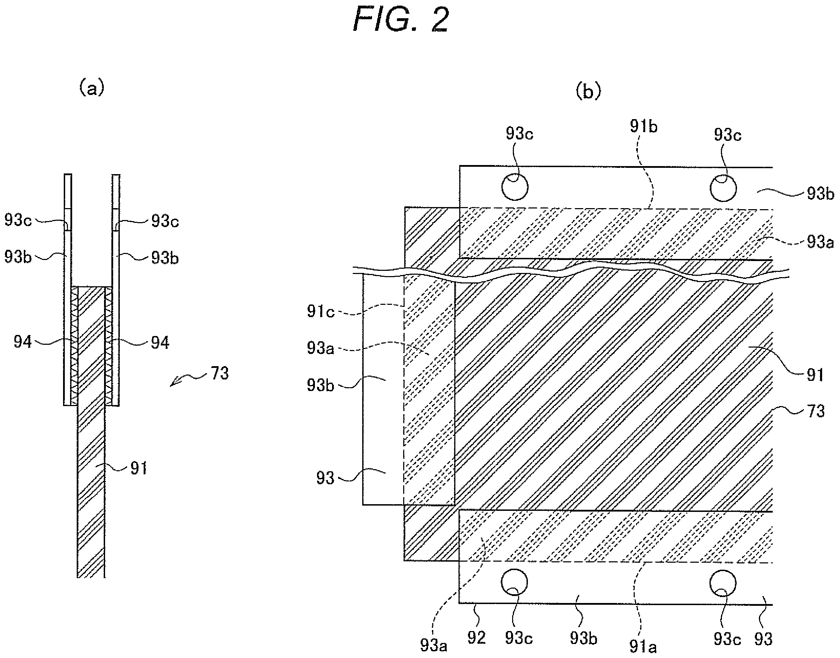

As illustrated in Figs. 2(a) and 2(b), in the damping wall assembly 73, a second member 93 is mounted as the frame 92 to any one or both of a front face portion 91d disposed inward of the building and a rear face portion 91e disposed outward of the building in both side ends 91c, a lower end 91a, or an upper end 91b of the panel 91.

The second member 93 is formed of a plate material having an approximately band shape extending along a circumferential edge of the panel 91. As the second member 93, a pair of second members is provided in the panel 91 by being mounted to the front face portion 91d and the rear face portion 91e of the panel 91. The second member 93 has an installation portion 93a installed in the panel 91 and an extension 93b extending from the installation portion 93a in an in-plane direction of the panel 91. The second member 93 is attached to one or both surfaces of the panel 91. In the following example, it is assumed that the second member 93 is attached to both surfaces of the panel 91. The second member 93 is, for example, a metal plate material formed of any metal material such as a steel plate or an aluminum plate.

The installation portion 93a of the second member 93 is bonded to the front and rear face portions 91d and 91e of the panel 91 using an elastic adhesive 94 such as a silicone sealant or a silicone double-sided tape, so that the second member 93 is fixed as the elastic adhesive 94 is dried and hardened. Note that the second member 93 has through-holes 93c drilled on the extension 93b.

In the damping wall assembly 73, the second member 93 can be separated from the panel 91 by installing the second member 93 as a frame 92 in the panel 91 using the elastic adhesive 94.

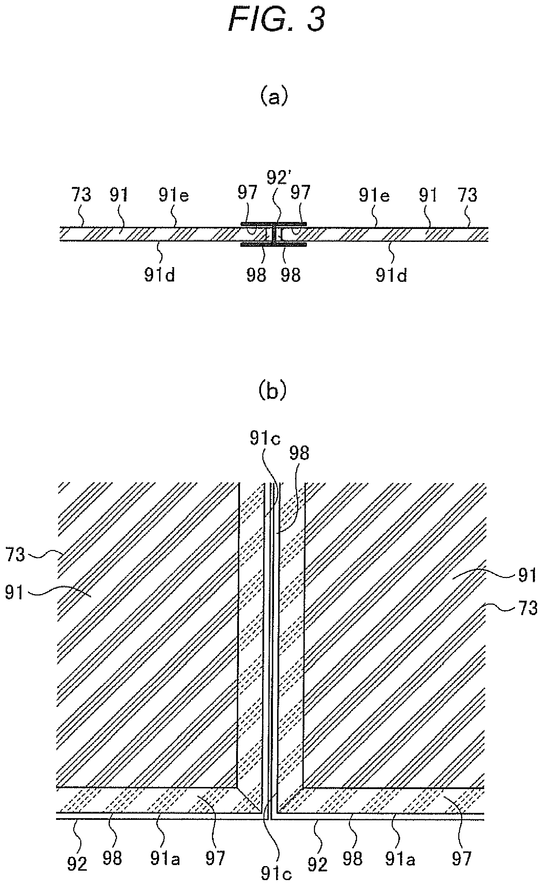

As illustrated in Figs. 3 (a) and 3(b), the damping wall assembly 73 is provided with a fitting portion 97 formed as a frame 92' where both side ends 91c, an lower end 91a, or a upper end 91b of the panel 91 are fitted. As the damping wall assembly 73 is fitted to the fitting portion 97 formed in the frame 92', both the side ends 91c, the lower end 91a, and the upper end 91b of the panel 91 are fixed to the frame 92', so that a plurality of panels 91 are integrated in a lateral direction.

The frame 92' is provided with the fitting portion 97 where the front and rear face portions 91d and 91e of the panel 91 are fitted. The frame 92' is provided with an elastic cushioning 98 such as rubber inside of the fitting portion 97, so that both side ends 91c, the lower end 91a, and the upper end 91b of the panel 91 are fixed to the frame 92' while the edge surface of the panel 91 abuts on the elastic cushioning 98.

In the damping wall assembly 73, since the elastic cushioning 98 such as rubber is provided inside of the fitting portion 97 formed in the frame 92', the edge surface of the panel 91 does not directly come into contact with the frame 92'. As a result, using the vibration control wall structure 71 according to the present invention, when a vibration is generated in a building due to an earthquake or wind, the elastic cushioning 98 of the frame 92' absorbs a relative displacement between the panel 91 and the frame 92'. Therefore, it is possible to damp a vibration applied to a building.

The joint structure 200 applied to the vibration control wall structure 71 having the aforementioned configuration is provided between the wall frame 72 and the damping wall assembly 73 using the lower end 91a or the upper end 91b of the panel 91 that is not fixed to the beam 82 as illustrated in Fig. 1.

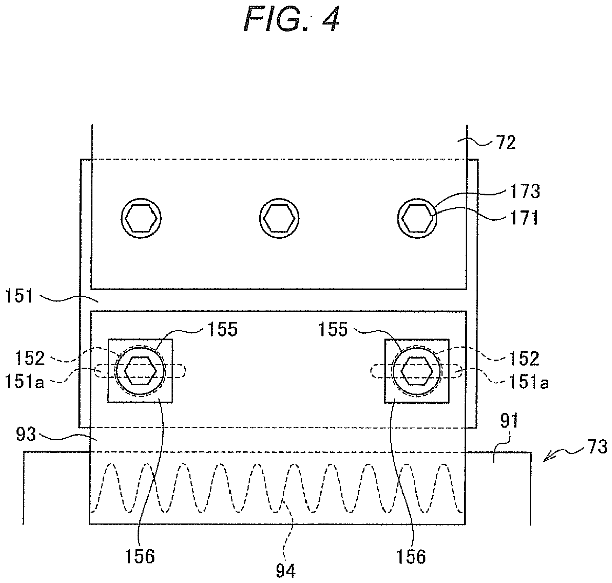

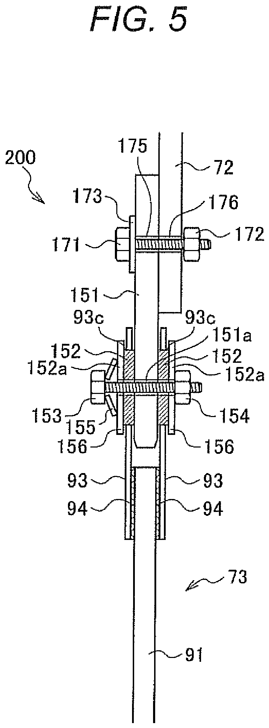

Fig. 4 is a plan view illustrating the joint structure 200 provided in the upper end 91b of the panel 91, and Fig. 5 illustrates its cross section. The joint structure 200 includes a second member 93 installed in the panel 91, a first member 151 connected to the wall frame 72 using a bolt 171 and a nut 172, a bushing member 152 fitted to a through-hole 93c formed in the second member 93, a bolt 153, a nut 154, a disk spring 155 and a washer 156 interposed between a head of the bolt 153 and the bushing member 152, a washer 157 interposed between the nut 154 and the bushing member 152, and a washer 173 interposed between the bolt 171 and the first member 151.

The bushing member 152 is formed of a steel plate, an aluminum plate, a stainless plate, a brass plate, resin, rubber, a resin plate, and the like. The bushing member 152 has a through-hole 152a in its center so as to form a so-called ring shape. The bushing member 152 has a shape and a size determined depending on a shape of the through-hole 93c of the second member 93 where the bushing member 152 is fitted. That is, if the through-hole 93c has a circular shape, the bushing member 152 has a circular shape having a diameter slightly smaller than that of the through-hole 93c. Similarly, if the through-hole 93c has a polygonal shape, the bushing member 152 also has a polygonal shape having a diameter slightly smaller than that of the through-hole 93c. Furthermore, it is assumed that this bushing member 152 has a thickness larger than that of the second member 93. As illustrated in Fig. 5, if the second member 93 is attached to both faces of the panel 91, the bushing member 152 is fitted to each through-hole 93c of each second member 93.

The first member 151 is further provided with a bolt hole 175 over the horizontal long hole 151a. The bolt 171 described above is inserted into this bolt hole 175 by interposing the washer 173. The bolt 171 has a shank inserted into the bolt hole 176 of the wall frame 72 and a tip screwed to the nut 172.

The bolt 153 has a shank inserted into the through-hole 152a of the bushing member 152 and the through-hole 93c of the second member 93. A tip of the bolt 153 is screwed to the nut 154. By fastening the bolt 153 and the nut 154, a compressive force from the head of the bolt 153 is transmitted through the disk spring 155 and the washer 156 interposed between the head of the bolt 153 and the bushing member 152, and a compressive force of the nut 154 is transmitted to the bushing member 152 through the washer 157. As a result, the second member 93 is fixed to the panel 91 while the pressing force is applied from the bushing member 152 to both faces of the first member 151.

Next, the functional effects according to the present invention obtained from the aforementioned configuration will be described.

If a vibration caused by an earthquake is applied to a constructional structure, the panel 91 is vibrated and displaced horizontally relative to the wall frame 72, in other ward, in the in-plane direction of the panel 91. In this case, the panel 91 and the second member 93 connected to the panel 91, and the bushing member 152 fitted to the second member 93 are displaced relative to the first member 151 connected to the wall frame 72. In practice, the shank of the bolt 153 inserted into the through-hole 152a of the bushing member 152 is horizontally and reciprocatingly vibrated in response to the earthquake inside the horizontal long hole 151a of the first member 151. In this case, the bushing member 152 is pressed toward a surface of the first member 151. However, in response to the horizontal displacement of the shank of the bolt 153 inside the horizontal long hole 151a, the bushing member 152 slides on the surface of the first member 151. That is, the bushing member 152 slides alternatingly forward and backward with respect to the paper plane of Fig. 5 while the bushing member 152 is pressed toward to the first member 151. As a result, friction is generated between the surface of the first member 151 and the bushing member 152 pressed to the first member 151. In addition, in response to this friction, vibration energy of the earthquake is absorbed due to the friction damping effect.

Therefore, according to the present invention, it is possible to implement the joint structure 200 capable of sufficiently absorbing a vibration energy caused by a strong earthquake and the like.

According to the present invention, since the first member 151 and the bushing member 152 are formed of different materials, they can slide relative to each other in a heterogeneous junction state. Here, the heterogeneous junction state refers to a heterogeneous metal contact state between a steel material and aluminum, a heterogeneous metal contact state between an iron or steel material and brass, a heterogeneous metal contact state between an iron or steel material and stainless, a heterogeneous junction state between an iron or steel material and resin containing metal powder, a heterogeneous junction state between an iron or steel material and resin containing no metal powder or rubber, and the like. That is, this heterogeneous junction state may include any contact state as long as materials of the first member 151 and the bushing member 152 are different. As a result, it is possible to more effectively generate the aforementioned friction damping effect. In particular, if a heterogeneous junction state is formed between an iron or steel plate and an aluminum plate, it is possible to more strongly generate a frictional force due to a difference of the frictional coefficient. Therefore, it is possible to more effectively generate the friction damping effect.

By improving smoothness on a contact surface between the first member 151 and the bushing member 152, when the first member 151 and the bushing member 152 slide in the heterogeneous junction state, the aluminum or the like is partially merged into the iron or steel plate or the like, due to the friction between an iron or steel plate and an aluminum plate or the like. Therefore, metal particles of each material are mixed, and no boundary surface is generated, so that a portion where metal particles float is formed. As a result, using the joint structure 200 according to the present invention, compared to frictional resistance formed along the boundary surface, it is possible to obtain a remarkably higher frictional coefficient. Therefore, it is possible to remarkably improve absorption performance against a vibration applied to a building and reliably prevent a collapse of the building or a fall-down of the panel 91.

According to the present invention, the thickness of the bushing member 152 is larger than the thickness of the second member 93. Therefore, the following effects can be obtained. Specifically, it is difficult to produce the first and second members 93 and 151 in a large quantity such that an interval between the second members 93 attached to both faces of the panel 91 is adjusted to be exactly equal to the thickness of the first member 151. Typically, as illustrated in Fig. 5, the interval between the second members 93 is wider than the thickness of the first member 151. In this case, the first member 151 is loosely fitted between the second members 93. In this state, the thickness of the bushing member 152 is larger than the thickness of the first member 151. Therefore, it is possible to absorb a dimensional variation between the interval between the second members 93 and the thickness of the first member 151. That is, since the thickness of the bushing member 152 is larger than the thickness of the second member 93, it is possible to prevent the bushing member 152 from sinking into the through-hole 93c of the second member 93. As a result, the interval of the second members 93 attached to both faces of the panel 91 is not necessary to be exactly equal to the thickness of the first member 151. Therefore, it is possible to improve design freedom and further a yield of the products.

The joint structure 200 according to the present invention may also be applied as a damper.

### Second Embodiment

An inter-element joint structure 100 according to an embodiment of the present invention will now be described with reference to the accompanying drawings.

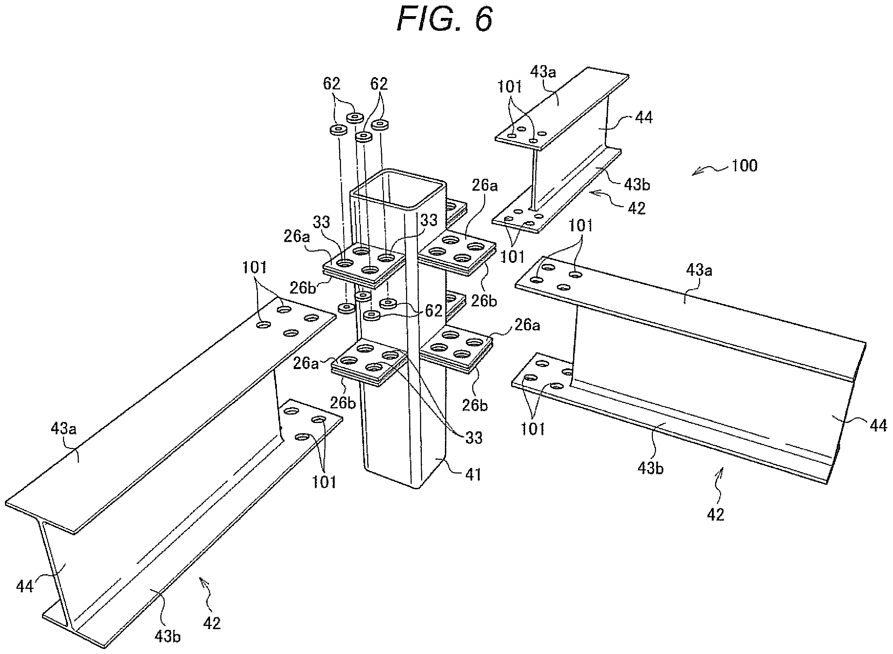

The joint structure 100 according to the present invention is applied to a joint structure between a column 41 and a beam 42 as illustrated in Fig. 6. In this joint structure 100, second members 26 extend from the column 41 vertically erected as a so-called steel-pipe column such that in-plane directions of the second members 26 are inparallel to the horizontal direction. In addition, a beam 42 is provided with a first member 43a formed in a flange shape on an upper end of a web 44 and another first member 43b formed in a flange shape on a lower end of the web 44.

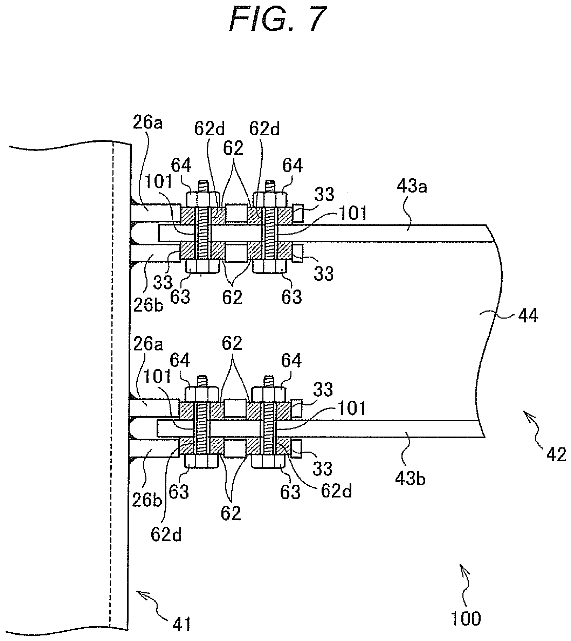

Fig. 7 is a cross-sectional view illustrating the joint structure 100 in details.

The first members 43a and 43b extend outward along the web 44 such that their in-plane directions are in parallel to the horizontal direction. The first members 43a and 43b are provided with holes 101. A shank of the bolt 63 is inserted into each hole 101. The first member 43 is formed of any type of metal plate material such as a steel plate, an aluminum plate, a stainless plate, and a brass plate.

The second members 26 are fixed to the column 41 by welding. The second member 26 is fixed to the column 41 in advance before the beam 42 is jointed to the column 41. Specifically, the second member 26 includes a second members 2 6a and another second member 26b installed under the second member 26a at an interval. The first member 43 serving as a beam 42 is interposed between the second members 26a and 26b.

The second members 26a and 26b are provided with through-holes 33. A bushing member 62 is fitted to each of the through-holes 33. The bushing member 62 has a configuration similar to that of the first embodiment. The thickness of the bushing member 62 maybe set to any value. However, in the example of Fig. 7, the bushing member 62 has a thickness set such that it does not protrude from the surface of the second member 26a and 26b. Note that this bushing member 62 may be fitted to the through-hole 33 tightly without amarginor loosely with a margin.

A bolt 63 has a shank inserted into the through-hole 62d of the bushing member 62 and the hole 101 of the first member 43. The bolt 63 has a tip screwed to the nut 64. By fastening the bolt 63 and the nut 64, a compressive force from the head of the bolt 63 and a compressive force generated between the head of the bolt 63 and the nut 64 are transmitted through the bushing member 62 of the second member 26a and the bushing member 62 of the first and second members 43 and 26b. As a result, the first and second members 43 an 26 can be fixed while a pressing fore is applied from the bushing member 62 to both surfaces of the first member 43. Note that a so-called high-strength bolted connection may also be performed between the bolt 63 and the nut 64.

Next, the functional effects obtained from the aforementioned configuration according to the present invention will be described.

When a vibration caused by an earthquake is applied to a constructional structure, the beam 42 is vibrated and displaced in a direction horizontal to the column 41, in other words, in an in-plane direction of the first member 26. In this case, the first member 26 is displaced relative to the bushing member 62 fitted to the second member 33. In practice, the shank of the bolt 63 inserted into the through-hole 62d of the bushing member 62 is reciprocatingly vibrated in the horizontal direction relative to the hole 101 of the first member 43 in response to the earthquake. In this case, the bushing member 62 is pressed toward the surface of the first member 43. However, the bushing member 62 slides on the surface of the first member 43 in response to such a horizontal displacement force. That is, as illustrated in Fig. 7, the bushing member 62 slides alternatingly in the left-right direction on the paper plane while it is pressed to the first member 43. As a result, friction is applied between the surface of the first member 43 and the bushing member 62 pressed to the first member 43. In addition, in response to this friction, vibration energy of an earthquake is absorbed by virtue of the friction damping effect.

Therefore, according to the present invention, it is possible to implement the joint structure 100 capable of sufficiently absorbing vibration energy caused by a strong earthquake or the like.

In particular, according to the present invention, the first member 43 and the bushing member 62 maybe formed of different materials, so that they can slide against each other in a heterogeneous junction state. As a result, it is possible to more effectively apply the friction damping effect described above. Note that the first member 43 itself and the bushing member 62 itself may be formed of different materials, or at least a contact area between the first member 43 and the bushing member 62 may be formed of a heterogeneous material. As a result, it is possible to obtain a remarkably high frictional coefficient due to the metal floating portion described above in addition to the aforementioned effects.

According to the present invention, initially, the second members 26a and 26b are jointed to the column 41 by welding, and the first members 43aand 43b of the beam 42 are then interposed between the second members 26a and 26b. Then, the bushing member 62 is fitted to the through-hole 33, and the first and second members are fixed by fastening the bolts 63 and the nuts 64. In this case, a positional deviation or a construction error may occur when the second members 26 are welded to the column 41. As a result, a gap may be generated between the second member 26 and the first member 43. A total sum of this gap is set to a value "α." That is, the value α is expressed as a sum of the width between the first and second members 26a and 43a and the width between the first member 26b and the second member 43a.

Here, if the thickness of the bushing member 62 is set to "t," it is assumed that "t > α." As a result, even when a positional deviation or a construction error is generated in welding of the second member 26 to the column 41, the thickness "t" of the bushing member 62 is not smaller than the value "α." Therefore, it is possible to steadily transmit a vibration of the second member 26 or the like to the first member 43 through the bushing member 62.

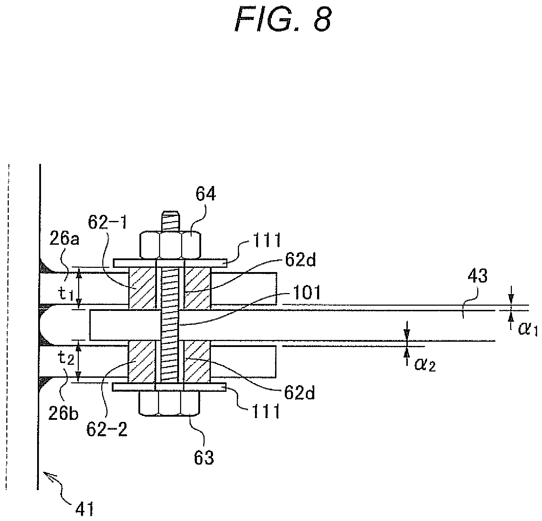

Fig. 8 illustrates a joint structure 100 according to another embodiment of the present invention. In this example, the bushing member 62 has a larger thickness. Specifically, the thickness of the bushing member 62 increases such that it protrudes outward of the second member. Even in this case, by setting the thickness "t" of the bushing member 62 to satisfy the condition "t > α," it is possible to steadily transmit a vibration from the second member 26 to the first member 43 through the bushing member 62. In the relating configuration, washers 111 are interposed between the head of the bolt 63 and the bushing member 62 and between the nut 64 and the bushing member 62.

In this embodiment illustrated in Fig. 8, the bushing member 62 has a thickness larger than that of the second member 26. Therefore, it is possible to obtain the following effects. Specifically, it is difficult to weld the second member 26 to the column 41 exactly in a predetermined position. Typically, as illustrated in Fig. 8, the interval between the second members 26a and 26b is larger than the thickness of the first member 43 in many cases. In this case, the first member 43 is loosely fitted between the second members 26a and 26b. In this state, assuming that "α1" denotes a gap between the first member 43 and one of the second members 26a, "α2" denotes a gap between the first member 43 and the other second member 26b, "t1" denotes a thickness of the bushing member 61-1 fitted to the one second member 26a, and "t2" denotes a thickness of the bushing member 61-2 fitted to the through-hole formed in the second member 26b, it is indispensable to establish relationships "α1 < t1" and "α2 < t2." As a result, it is possible to absorb a slight deviation in an installation position of the second member 26 to the column 41.

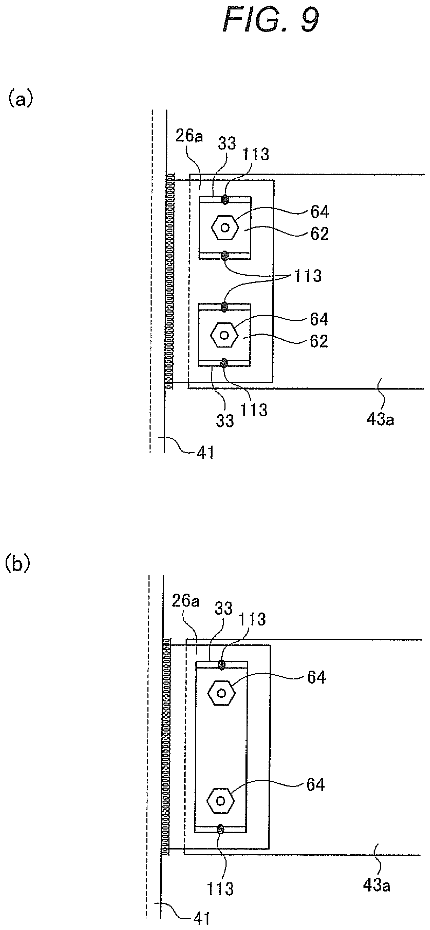

Fig. 9 (a) is a plan view illustrating the joint structure 100 as seen in a vertical direction. In this example, the bushing member 62 has a rectangular planar shape. Similarly, the through-hole 33 where the bushing member 62 is fitted is formed in a rectangular shape matching the shape of the outer diameter of the bushing member 62. Note that, although a gap may be formed between the bushing member 62 and the through-hole 33 in some cases, the bushing member 62 and the through-hole 33 can be firmly fixed to each other, for example, by performing spot welding 113 for the gap.

Fig. 9(b) illustrates an example in which the bushing member 62 has a rectangular planar shape. Similarly, the through-hole 33 where the bushing member 62 is fitted is formed in a rectangular shape matching the shape of the outer diameter of the bushing member 62. Note that, similarly, spot welding 113 is performed for the gap between the bushing member 62 and the through-hole 33. Note that the planar shape of the bushing member 62 may include a triangular, pentagonal, hexagonal, or other polygonal shapes as well as the rectangular shape. Since the through-hole 33 also has a shape matching the planar shape of the bushing member 62, they can be fitted to each other. Note that a plurality of bushing members 62 having such a polygonal shape may be arranged side by side in the through-holes 33. If the bushing members 62 and the through-holes 33 are formed in a polygonal shape, it is possible to prevent turning of the bushing member 62 in response to rotation of the bolt 63.

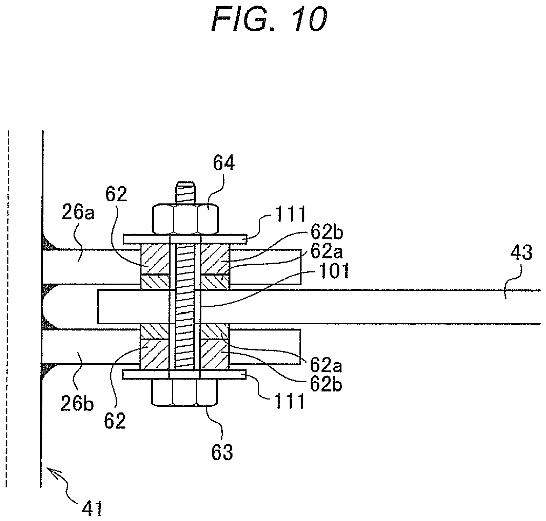

Fig. 10 illustrates an example in which the bushing member 62 has a two-layer structure. In this example, the bushing member 62 includes a first layer 62a coming into contact with the first member 43 and a second layer 62b coming into contact with the bolt 63 and the nut 64. Meanwhile, in the meaning of the sentence "the second layer 62b comes into contact with the bolt 63 and the nut 64," the second layer 62b may come into contact with a fastening member such as the bolt 63 and the nut 64 by interposing the washer 111.

Here, the first member 43 and the first layer 62a are formed of different materials. As a result, they can slide against each other in the heterogeneous junction state described above.

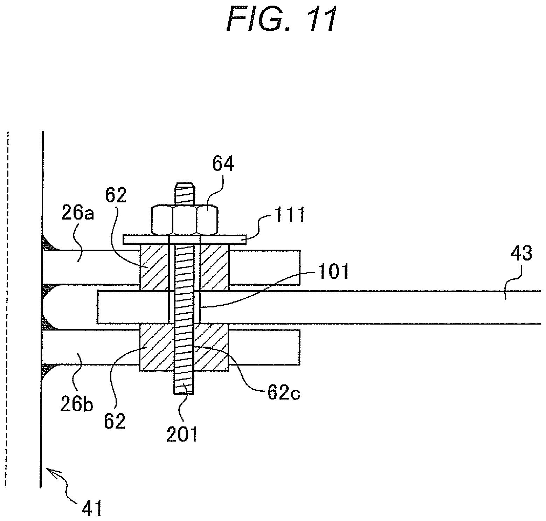

Fig. 11 illustrates an example in which a female thread 62c where a shank of the bolt 63 can be screwed is formed inside the bushing member 62. A hole is formed in an approximate center of the bushing member 62, and the female thread 62c is formed on an inner wall of the hole. In this configuration, there is no need to provide the nut 64. Therefore, it is possible to reduce the number of components and a construction cost. Alternatively, the nut 64 corresponding to the head of the bolt 63 and the threaded bar 201 that can be screwed to the nut 64 may be substituted with the bolt 63 describe above. The planar shape of the bushing member 62 maybe polygonal insteadof circular. In particular, if the bushing member 62 has a polygonal planar shape, it is possible to prevent excessive rotation.

Alternatively, without limiting to the configuration of Fig. 11, the second member 2 6b may be omitted, and only the second member 26a and the first member 43 may be jointed to each other.

The bushing member 62 may be integrally formed to be connected to the second member 26a, the first member 43, and the second member 26b.

The bushing member 62 may include a spacer having two or more layers. This spacer may be formed such that its thickness gradually increases or decreases outward.

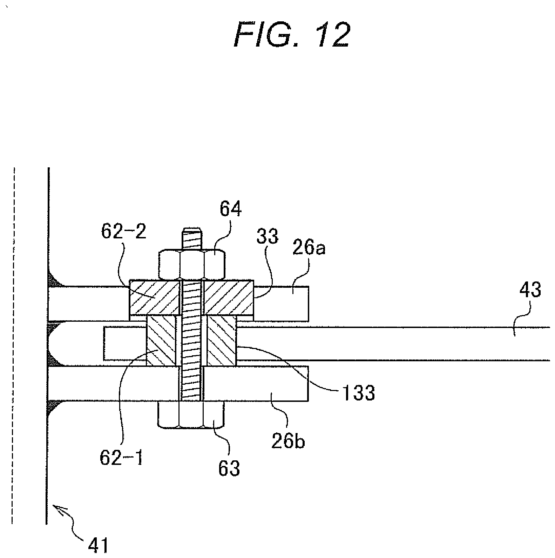

Fig. 12 illustrates an example in which the second bushing member 62-2 is fitted to the through-hole 33 formed in the second member 26a, and the first bushing member 62-1 is fitted to the through-hole 133 of the first member 43. The first and second bushing members 62-1 and 62-2 abut on each other. The second bushing member 62-2 has a diameter larger than that of the first bushing member 62-1. The first and second bushing members 62-1 and 62-2 are fastened to each other by inserting, at least, a shank of the bolt 63 to each hole of the first and second bushing members 62-1 and 62-2. If the first and second bushing members 62-1 and 62-2 are formed as separate members, the second bushing member 62-2 may be formed to have a larger diameter, and the first bushing member 62-1 maybe formed to have a smaller diameter. As a result, in fastening of the bolt 63 and the nut 64, a stress can be concentrated on the first bushing member 62-1. Therefore, it is possible to implement stable bolt installation. Alternatively, the first and second bushing members 62-1 and 62-2 maybe formed to have the same diameter, or the second bushing member 62-2 may have a diameter smaller than that of the first bushing member. In addition, the first and second bushing members 62-1 and 62-2 may be formed of the same member without separation. Furthermore, the first bushing member 62-1 may be fitted to the second bushing member 62-2.

Similarly, in the configuration of Fig. 12, the first bushing member 62-1 slides alternatingly in the left-right direction on the paper plane while the first bushing member 62-1 is pressed to the second member 26b. As a result, friction is applied between the surface of the second member 26b and the bushingmember 62-1 pressed to the second member 26b. Inaddition, vibration energy of an earthquake is absorbed by the friction by virtue of the friction damping effect.

Although the bushing member 62 is not especially provided in the second member 26b, the bushing member 62 may also be provided in the second member 26b without limiting to such a configuration. In this case, the bushing member provided in the second member 26b is arranged to come into contact with the first bushing member 62-1 described above. Similarly, in this case, the bushing member 62 of the second member 26b may have a diameter smaller or larger than that of the first bushing member 62-1.

In the configuration of Fig. 12, the second member 26b may be omitted, and only the second member 26a and the first member 43 may be jointed to each other.

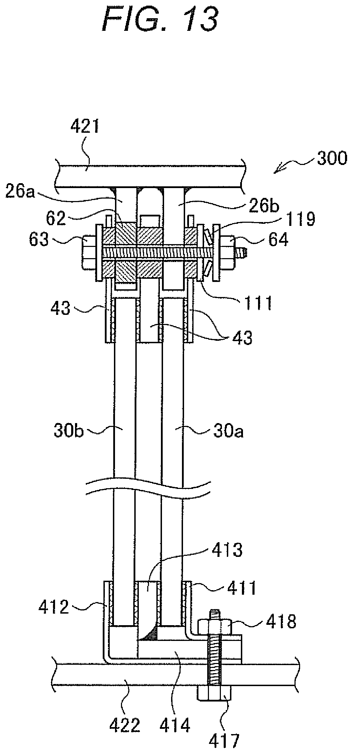

Note that the present invention is not limited to the aforementioned embodiments. Instead, as illustrated in Fig. 13, the present invention may be applied to a constructional structure 300 provided with a glass panel 30. In this constructional structure 300, a glass panel 30 is arranged between upper and lower frames 421 and 422. The glass panel 30 is formed of general float glass containing silicate as a main component and using a float method and has a rectangular shape. Naturally, the glass panel 30 is not limited to the float glass, but may be plate-shaped glass formed of other materials such as wired glass, tempered glass, or IR reflecting glass or organic glass formed of polycarbonate, acrylic resin, or the like. That is, the glass panel 30 may be a transparent or semitransparent panel serving as a window and having a predetermined level of stiffness. Furthermore, if the glass panel 30 is not used as a window or an outer wall, optical transparency or water resistance is not necessary. In conclusion, the glass panel 30 is not limited to a glass product, and any other panel may be employed without a limitation as long as it constitutes a wall face of a building.

The glass panel 30 may have a so-called double glazing structure including a glass panel 30a and a glass panel 30b, in which a front surface of its lower side is bonded to the lower plates 411 and 412 using an adhesive. In addition, the glass panels 30a and 30b are bonded using an adhesive while a spacing plate 413 is interposed between the glass panels 30a and 30b. The lower ends of the lower plates 411 and 412 are bent nearly in parallel to the lower frame 422. In addition, another spacing plate 414 is installed in the lower end of the spacing plate 413 nearly in parallel to the lower frame 422. Note that the lower plates 411 and412 and the spacing plate 414 bent inparallel to the lower frame 422 are mounted to the lower frame 422 using a bolt 417 and a nut 418.

The second members 26a and 26b are fixed to the upper frame 421 by welding in advance. In addition, the first member 43 is installed in the upper side of the glass panels 30a and 30b using an adhesive. In the example of Fig. 13, three first members 43 are attached to the outer sides of a pair of glass panels 30a and 30b and the gap between the glass panels 30a and 30b. A structure for fitting the aforementioned bushing member 62 is also applied to the gap between the first member 43 and the second member 26. Meanwhile, although the bushing member 62 fitted to the first member 43 and the bushing member 62 fitted to the second member 26 come into contact individually in the example of Fig. 13 , the present invention is not limited thereto.

Note that, although the bushing members 62 are fixed using a fastening member such as the bolt 63 and the nut 64, a washer 111 may also be interposed between the nut 64 and the bushing member 62, or a spring 119 may also be interposed between the washer 111 and the nut 64.

In particular, the lower plates 411 and 412 may have a bending angle of 90° accurately. In some cases, there may be a slight deviation in the bending angle. In this case, extending directions of the glass panels 30a and 30b interposed by the lower plates 411 and 412 and the spacing plate 413 become sloped not exactly perpendicular to the upper frame 401. However, the second members 26a and 26b are fixed to the upper frame 421 by welding in advance, and the first member 43 installed in the glass panel 30 is then mounted to the second members 26a and 26b. For this reason, the in-plane directions of the second members 26a and 26b are not necessarily equal to the in-plane direction of the first member 43 in some cases. Therefore, the interval between the second members 26a and 26b is set to be slightly larger than the thickness of the first member 43, so that the first member 43 is loosely fitted between the second members 26a and 26b.

As a result, a total sum α of the gap is generated between the second members 26a and 26b and the first member 43. However, naturally, a relationship between the total gap "α" and the thickness "t" of the bushing member 62 is established as "t > α." That is, even when the in-plane directions of the second members 26a and 26b described above are not equal to the in-plane direction of the first member 43, and an angular deviation is generated between their angles, it is possible to absorb such an angular deviation by increasing the thickness of the bushing member 62.

Although the double glazing glass including the glass panels 30a and 30b has been described for exemplary purposes in the aforementioned embodiment, the present invention is not limited thereto. The glass panel 30 may include a single layer, or three or more layers.

The present invention may also be applied to a so-called turnbuckle wall brace. The turnbuckle wall brace includes second members 26a and 26b fixed to a constructional structure such as a column or a beam by welding in advance, a bushing member 62 fitted to the through-holes of the second members 26a and 26b to come into contact with the first member 43, a bolt 63 inserted into the bushing member 62 and the first member 43, and a nut 64 screwed to the bolt 63. In addition, the other end of the first member 43 is fixed to the other end of the threaded bar provided with a thread in one end by welding. Even in this turnbuckle wall brace, it is possible to obtain the aforementioned effects.

According to the present invention, the through-hole 33 may be tapered. By inserting the bushing member 62 into the tapered through-hole 33, it is possible to allow the bushing member 62 to reliably abut on the inner circumferential surface of the through-hole 33. As a result, it is possible to prevent rattling.

Furthermore, according to the present invention, the bushing member 62 is inserted into the through-hole 33 in a cooled state, and the bushing member 62 and the through-hole 33 may have no diameter difference when they have the same temperature. That is, although the material of the bushing member 62 is contracted through cooling, the contracted material expands when the temperature rises latter. Using this phenomenon, the diameter of the bushing member 62 is reduced through cooling when it is inserted into the through-hole 33. It is possible to improve fitting workability. Then, the temperature rises from the cooled state, and the bushing member 62 fitted to the through-hole 33 expands. As a result, it is possible to fit the bushing member 62 into the through-hole 33 without a gap.

### Third Embodiment

An inter-element joint structure 100 according to the present invention will now be described in details with reference to the accompanying drawings.

The joint structure 100 according to the present invention is applied to the joint structure between the column 41 and the beam 42 illustrated in Fig. 6. In the third embodiment, like reference numerals denote like elements as in the first and second embodiments, and they will not be described repeatedly.

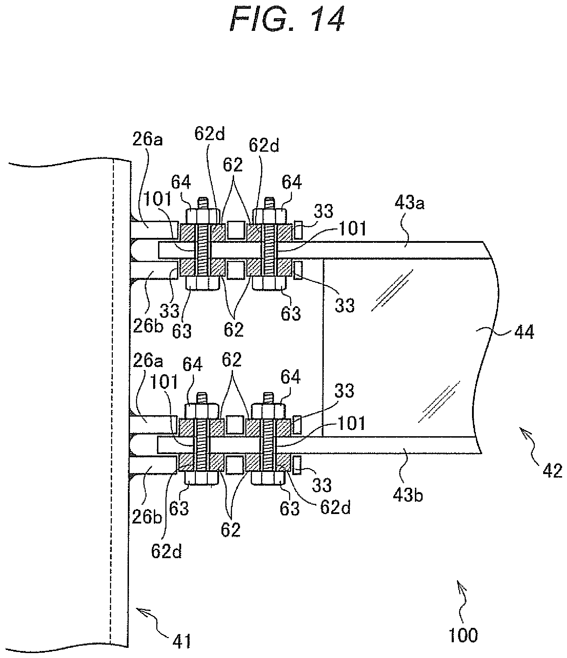

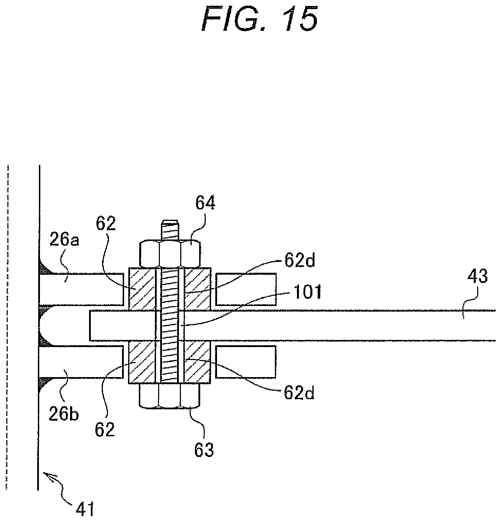

Fig. 14 is a cross-sectional view illustrating the joint structure 100 according to the present invention, and Fig. 15 is a cross-sectional view illustrating the joint structure 100 in details.

The second members 26a and 26b are provided with through-holes 33. A bushing member 62 is fitted to each through-hole 33. The bushing member 62 is formed of a ductile metal such as low-yield-point steel, aluminum, copper alloy, lead alloy, tin alloy, beryllium alloy, nickel alloy, zinc alloy, and silver alloy. This bushing member 62 may be formed of any material susceptible to elastic deformation or plastic deformation such as a rubber or resin plate as well as the ductile metal. If the through-hole 33 is circular, the planar shape of the bushing member 62 is circular having a diameter smaller than that of the through-hole 33. Similarly, if the through-hole 33 has a polygonal shape, the planar shape of the bushing member 62 also has a polygonal shape having a diameter smaller than that of the through-hole 33.

Since the bushing member 62 has a diameter smaller than that of the through-hole 33 of the second member, a gap is formed between a circumferential edge of the bushing member 62 and an inner circumferential surface of the through-hole 33. Note that this bushingmember 62 maybe fitted to the through-hole 33 tightly without a margin.

If this bushing member 62 comes into contact with the first member 43 , a contact area of the bushing member 62 makes a surface contact with the first member 43. Although the bushing member 62 may have any thickness, in the example of Fig. 14, the thickness of the bushing member 62 is set such that it does not protrude from the surface of the second members 26a and 26b. In the example of Fig. 15, the thickness of the bushing member 62 is set such that it protrudes from the surface of the second member 26a or 26b.

The bolt 63 has a shank inserted into the through-hole 62d of the bushing member 62 and the hole 101 of the first member 43. The tip of the bolt 63 is screwed to the nut 64. Since a contact area of the bushing member 62 makes a surface contact with the first member 43, a surface pressure is applied to the first member 43 when the compressive force is loaded.

As a result, it is possible to fix the bolt 63 and the nut 64 such that a pressing force is applied locally from the bushing member 62 to both surfaces of the first member 43. Note that so-called high-strength bolted connection may also be performed between the bolt 63 and the nut 64. In the aforementioned example, the bolt 63 is inserted from the downside, and the nut 64 is screwed to a thread of the bolt 63 from the upside. That is, the bolt 63 is installed from the downside, and the nut 64 is installed from the upside. However, the present invention is not limited thereto. The bolt 63 may be installed from the upside, and the nut 64 may be installed from the downside.

According to the present invention, since the diameter of the bushing member 62 is smaller than the inner diameter of the through-hole 33, a gap is generated between the circumferential edge of the bushing member 62 and the inner circumferential surface of the through-hole 33. For this reason, if the bushing member 62 is fitted to the through-hole 33, such a gap serves as a so-called clearance. Therefore, it is possible to improve fitting workability.

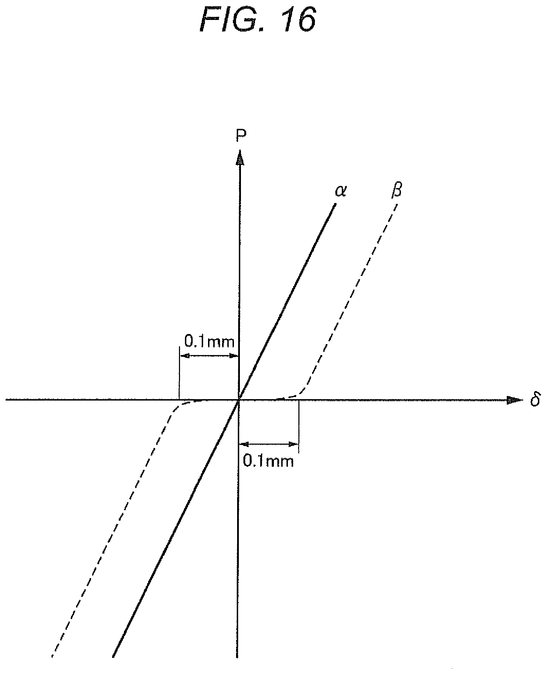

Meanwhile, if a horizontal vibration is applied in the event of an earthquake while the diameter of the bushing member 62 is smaller than the inner diameter of the through-hole 33, thebushingmember 62 makes reciprocation inside the through-hole 33. That is, a behavior β is exhibited on a load-deformation curve of Fig. 16. Assuming that a horizontal vibration is applied due to an earthquake, this behavior P generates only deformation δ, in particular, without a load P when the bushing member 62 moves inside the through-hole 33 in any case. Meanwhile, in the example of Fig. 16, the diameter of the bushing member 62 is smaller than the inner diameter of the through-hole 33 by 0.2 mm. The bushing member 62 receives a load P initially when the bushing member 62 comes into contact with the inner circumferential surface of the through-hole 33.

In this behavior β, deformation δ is necessary at a certain level until the load P is actually applied. Therefore, in many cases, earthquake performance is not suitably exerted as high as demanded in a building, Therefore, in terms of earthquake performance, since the gap between the circumferential edge of the bushing member 62 and the inner circumferential surface of the through-hole 33 is close to zero, it is possible to suitably exert earthquake performance by immediately applying a load as indicated by the behavior α when the load is applied.

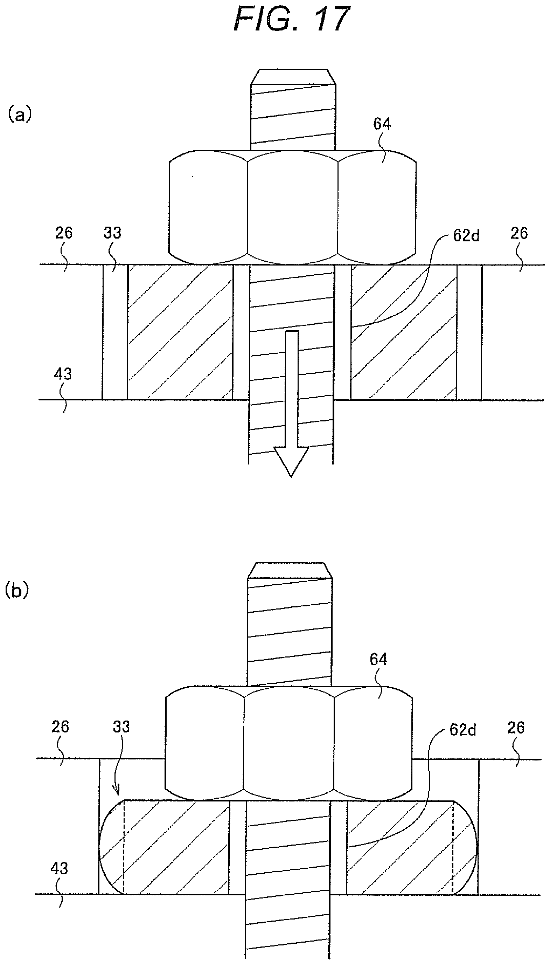

According to the present invention, since the diameter of the bushing member 62 is smaller than the inner diameter of the through-hole 33, it is possible to improve fitting workability and exert the function similar to the behavior α as illustrated in Fig. 16. That is, if a fastening force between the bolt 63 and the nut 64 is applied as indicated in the arrow direction of Fig. 17(a), the highly ductile bushing member 62 is compressed vertically. As a result, the bushing member 62 tends to expand outward. As this vertical compression of the bushing member 62 becomes stronger, the circumferential edge of the bushing member 62 expands outward in practice as illustrated in Fig. 17(b), so that it approaches or comes into contact with the inner circumferential surface of the through-hole 33. For this reason, it is possible to narrow a gap between the circumferential edge of the bushing member 62 and the inner circumferential surface of the through-hole 33. Furthermore, it is possible to infinitely reduce the gap to zero or make contact between the bushing member 62 and the through-hole 33.

In this manner, the bushing member 62 is deformed outward and approaches or comes into contact with the inner circumferential surface of the through-hole 33. Therefore, when a load is applied, as indicated by the behavior α of Fig. 16, it is possible to immediately apply the load. Therefore, it is possible to suitably exert earthquake performance.

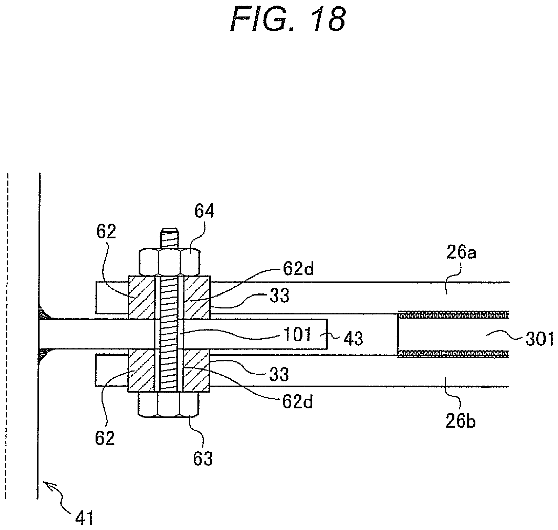

Fig. 18 illustrates an example in which the first member 43 is mounted to the column 41 in advance. The second members 26a and 26b are spliced to the beam member 301 without being mounted to the column 41. In Fig. 18, like reference numerals denote like elements as in Fig. 15, and they will not be described repeatedly.

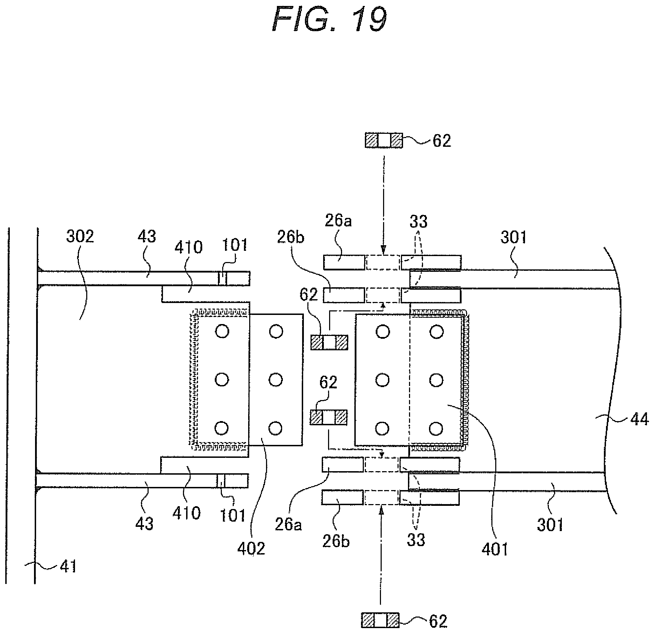

Fig. 19 illustrates a case where the configuration of Fig. 18 is applied in practice, in which a web 302 provided with first members 43 as upper and lower flanges is mounted to the column 41. This web 302 is spliced with a splice plate 402. Inaddition, a web 44 provided with beam members 301 as upper and lower flanges is prepared, and a splice plate 401 is spliced to the web 44. Meanwhile, the splice plates 401 and 402 are formed of a metal plate, and they are mounted by welding or the like as a splicing method.

After the web 302 provided with the first members 43 as upper and lower flanges is mounted to the column 41, the web 44 provided with the beam members 301 as upper and lower flanges approaches the web 302 in a horizontal direction. In addition, the first member 43 is fitted between the second members 26a and 26b mounted to the beam member 301. In this case, the web 44 is provided with notches 410 formed toward the first member 43 slide. The second members 26a and 26b are inserted into this notch 410. Then, the aforementioned bushing member 62 is fitted to the through-hole 33 and comes into contact with the first member 43, and the bolt is fastened. Furthermore, the splice plates 401 and 402 are mounted to the opposing webs 44 and 302, respectively.

Note that the present invention is not limited to a case where the web 44 provided with the beam members 301 as upper and lower flanges is mounted to the web 302 provided with the first members 43 as upper and lower flanges by approaching each other in the horizontal direction. For example, as seen in a top view, an approximate center of the web 44 provided with the beam members 301 as upper and lower flanges may be set as a rotational center, and the web 44 may be mounted to the web 302 by rotating the web 44. In this case, it is assumed that, as the web 44 is rotated, the second members 26a and 26b are exactly inserted into the notches 410, and the bushing member 62 is positioned to match the hole 101.

Naturally, the configuration of Fig. 19 may be applied to a case where the second member 26 is mounted to the column 41 in advance as illustrated in Fig. 15. The configuration of Fig. 19 may also be applied to the second embodiment described above.

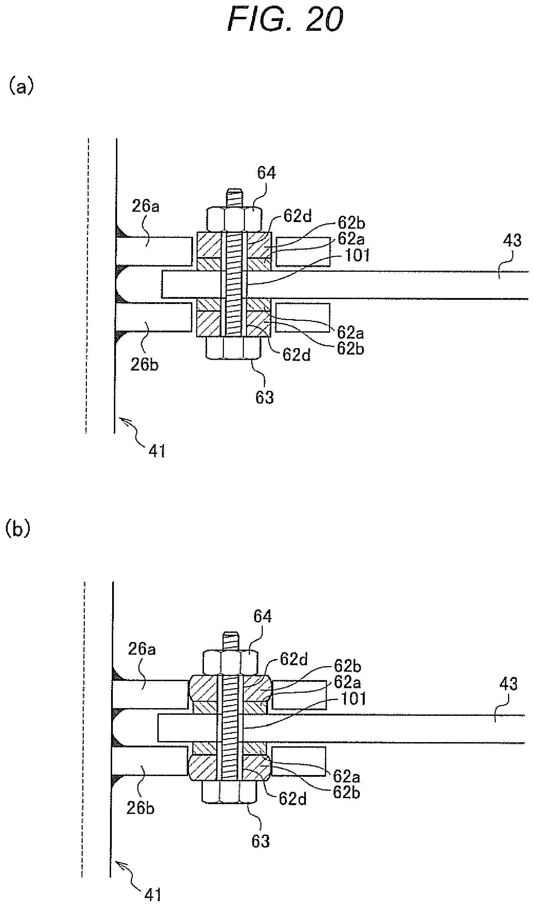

Note that the third embodiment is not limited to the examples described above. Fig. 20(a) illustrates an example in which the bushing member 62 has a two-layer structure. In this example, the bushing member 62 includes a first layer 62a coming into contact with the first member 43 and a second layer 62b coming into contact with the bolt 63 and the nut 64. In addition, in the meaning of the sentence "the second layer 62b comes into contact with the bolt 63 and the nut 64," a washer 111 (not shown) may also be installed in the fastening member such as the bolt 63 and the nut 64.

Here, the first member 43 and the first layer 62a are formed of different materials. As a result, the first member 43 and the first layer 62a may slide against each other in the heterogeneous junction state described above. That is, this heterogeneous junction state may be obtained in any method as long as the first member 43 and the first layer 62a are formed of different materials. As a result, it is possible to more effectively exert the aforementioned frictional resistance force. In particular, the first member 43 may include an iron plate or a steel plate, and the first layer 62a may include a plate material formed of an aluminum plate or a plate member formed of aluminum alloy, copper alloy, brass, stainless, and the like. As a result, it is possible to more suitably form the heterogeneous junction state between the first member 43 and the first layer 62a. In this case, the contact areas of the first member 43 and the first layer 62a may be formed of at least different materials.

The second layer 62b is formed of a material having ductility higher than that of the first layer 62a. This second layer 62b is formed of ductile metal such as low-yield-point steel, aluminum, copper alloy, lead alloy, tin alloy, beryllium alloy, nickel alloy, zinc alloy, or silver alloy, or the like as described above. This bushing member 62 may be formed of any material susceptible to elastic deformation or plastic deformation such as a rubber or resin plate as well as the ductile metal.

A method of jointing the first layer 62a and the second layer 62bmay include ultrasonic bonding, spot welding, adhering, gluing, caulking, or the like. Alternatively, the first layer 62a and the second layer 62bmay be independently attached without jointing.

Similarly, in this configuration, when a fastening force between the bolt 63 and the nut 64 is applied, the highly ductile second layer 62b is compressed vertically as illustrated in Fig. 20(b), and as a result, an outward expanding force is exerted. As the vertical compression of the second layer 62b becomes stronger, the circumferential edge of the second layer 62b expands outward, so that it approaches or comes into contact with the inner circumferential surface of the through-hole 33. For this reason, it is possible to narrow the gap between the circumferential edge of the second layer 62b and the inner circumferential surface of the through-hole 33. Furthermore, it is possible to infinitely reduce the gap to zero or make contact between the second layer 62b and the through-hole 33. In this manner, the second layer 62b is deformed outward and approaches or comes into contact with the inner circumferential surface of the through-hole 33. Therefore, when a load is applied, as indicated by the behavior α of Fig. 16, it is possible to immediately apply the load. Therefore, it is possible to suitably exert earthquake performance.

That is, in the configuration of Figs. 20 (a) and 20(b), it is possible to effectively transmit a bearing pressure by virtue of expansion of the second layer 62b.

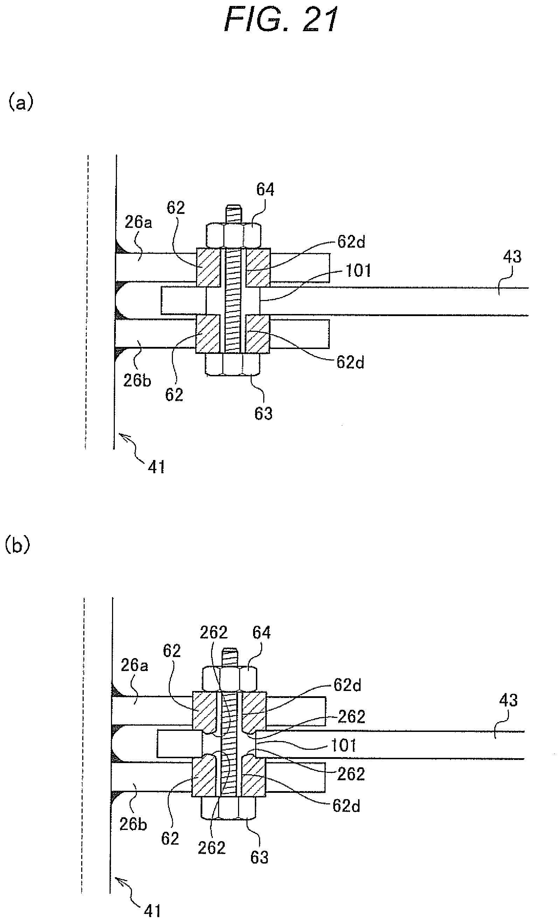

In the configuration of Fig. 21(a), the hole 101 of the first member 43 has a diameter larger than that of the through-hole 62d of the bushing member 62. When a fastening force between the bolt 63 and the nut 64 is applied, the bushing member 62 partially protrudes to the inside of the hole 101 of the first member 43 to form a protrusion 262 as illustrated in Fig. 21 (b) . This protrusion 262 is an area facing the hole 101 of the bushing member 62. The bushing member 62 is extruded from the hole 101 by virtue of the fastening force described above so as to form a convex shape.

By forming such a protrusion 262, when an earthquake vibration is applied in the horizontal direction, the protrusion 262 is caught in the hole 101 in the horizontal direction, so that it suppress deformation. In particular, since the bushing member 62 is formed of a ductile material, it is possible to relatively easily implement the protrusion depending on the fastening force. Note that, in the configuration of Figs. 21 (a)and 21(b), a gap may be formed between the bushing member 62 and the through-hole 33 or not.

According to the third embodiment, a curing agent (not shown) may be injected between the bushing member 62 and the through-hole 33. This curing agent may contain a material hardened from a liquid state such as a low-viscosity epoxy agent or an inorganic liquid. Since such a curing agent is filled in the gap between the circumferential edge of the bushing member 62 and the through-hole 33 , it is possible to fill the gap between the bushing member 62 and the through-hole 33. As a result, when the bushing member 62 slides on the surface of the first member 43, it is possible to prevent the bushing member 62 from moving inside the through-hole 33.

According to the third embodiment, a coating material having a high frictional coefficient may be coated on the surface of the bushing member 62. The coating material may be subjected to electroplating, hot dip galvanizing, or the like, or aluminum or copper may be plated or coated. That is, although the coating material is formed of aluminum alloy or copper alloy, the coating material may be formed of any material without a limitation. Since the coating material having a high frictional coefficient comes into contact with the first member 43, it is possible to more strongly exert a frictional force by virtue of a difference of the frictional coefficient. Therefore, it is possible to obtain a frictional transmission effect.

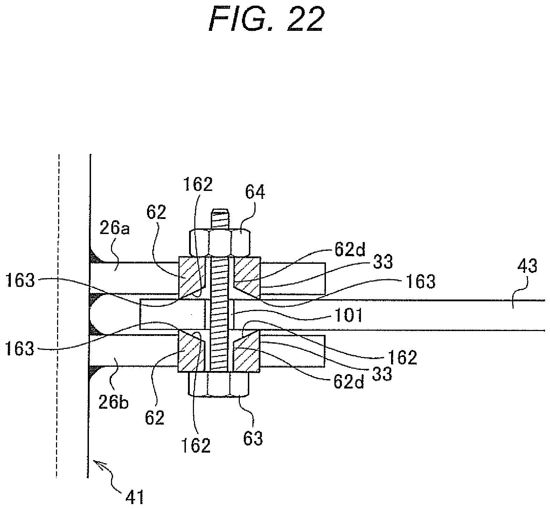

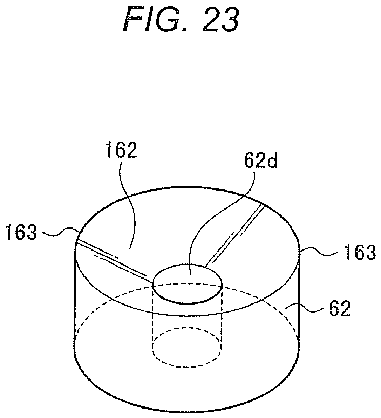

Fig. 22 is across-sectional side view illustrating another example of the third embodiment. Fig. 23 is an enlarged perspective view illustrating the bushing member 62 according to another example. In this example, the bushing member 62 has a slope surface 162 sloped such that the thickness gradually increases from an exact center of the through-hole 62d toward an apex portion 163 formed in the circumferential edge. This slope surface 162 faces the first member 43. That is, the slope surface 162 is not in parallel to the surface of the first member 43. The apex portion 163 is approximately acute in the cross-sectional shape. This slope surface is formed such that the apex portion 163 exactly matches the circumferential edge of the bushing member 62.

When the bushing member 62 comes into contact with the first member 43, the apex portion 163 formed in the circumferential edge of the bushing member 62 makes a line contact with the first member 43. Meanwhile, the present invention is not limited to a case where the apex portion 163 is formed in the circumferential edge of the bushing member 62. Alternatively, the apex portion 163 may be formed from the circumferential edge to the through-hole 62d. In addition, the apex portion 163 may be formed in the vicinity of the through-hole 62d.

The thickness of the bushing member 62 may be set to any value. In the example of Fig. 22, the thickness of the bushing member 62 is set such that it does not protrude from the surfaces of the second members 26a and 26b. The thickness of the bushing member 62 may also be set such that it protrudes from the surfaces of the second members 26a and 26b. Meanwhile, the bushing member 62 may be fitted to the through-hole 33 tightly without a margin or loosely with a margin. In this case, it is assumed that the diameter of the bushing member 62 is smaller than the inner diameter of the through-hole 33.

The bolt 63 and the nut 64 are similar to those of the aforementioned embodiment, and they will not be described repeatedly. However, inparticular, the apex portion 163 formed in the circumferential edge of the bushing member 62 makes a line contact with the first member 43. Therefore, when the compressive force is applied as described above, a stress is concentrated on the apex portion 163. As a result, a strong stress is applied locally to the first member 43 through the apex portion 163, so that the apex portion 163 is depressed to the first member 43.

As a result, it is possible to fix the bolt 63 and the nut 64 such that a pressing force is applied locally from the bushing member 62 to both surfaces of the first member 43. Note that so-called high-strength bolted connection may also be performed between the bolt 63 and the nut 64.

The effects according to the present invention obtained from the aforementioned configuration will now be described.

According to the present invention, the first member 43 comes into contact using the apex portion 163 formed in the circumferential edge of the bushing member 62. The apex portion 163 is approximately acute in the cross-sectional shape, and the bushing member 62 makes a line contact with the first member 43 using the apex portion 163. For this reason, when a compressive force is applied by the bolt 63, a stress is concentrated on the apex portion 163, and a strong stress is locally applied to the first member 43, so that the apex portion 163 can be depressed to the first member 43 in some cases. In this state, when the apex portion 163 of the bushing member 62 slides on the surface of the first member 43 as described above, stronger friction is applied between the surface of the first member 43 and the apex portion 163 of the bushing member 62 pressed to the first member 43. In particular, since the apex portion 163 is depressed to the first member 43 , it is possible to increase the frictional force. In addition, depending on this friction, deformation energy caused by the load i s absorbed better by virtue of the frictional transmission effect. Note that, similarly, in this configuration, a curing agent 169 may also be injected between the bushing member 62 and the through-hole 33.

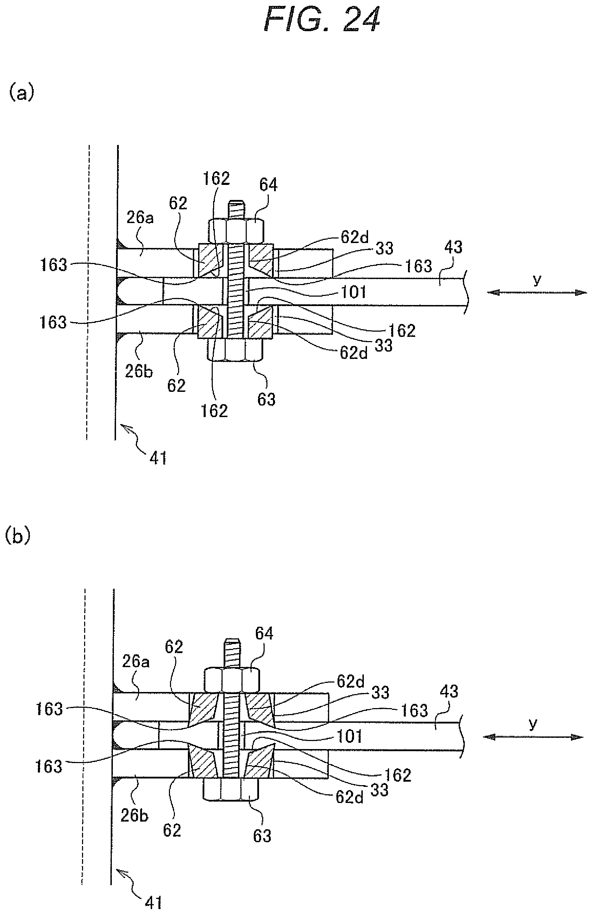

Fig. 24(a) illustrates a case where the diameter of the bushing member 62 is smaller than the inner diameter of the through-hole 33. If the diameter of the bushing member 62 is smaller than the inner diameter of the through-hole 33, a gap is generated between the circumferential edge of the bushing member 62 and the inner circumferential surface of the through-hole 33. For this reason, in order to fit the bushing member 62 into the through-hole 33 , such a gap serves as a so-called clearance. Therefore, it is possible to improve fitting workability. In addition, since the bushing member 62 has the apex portion 163 in the circumferential edge, the apex portion 163 of the bushing member 62 is deformed outward by virtue of the fastening force between the bolt 63 and the nut 64 as illustrated in Fig. 24(b). As a result, the apex portion 163 deformed outward is depressed to the inside of the first member 43. As a result, the circumferential edge of the bushing member 62 comes into contact with the inner circumferential surface of the through-hole 33 provided in the second member 26a and 26b. In this case, the present invention is not limited to a case where the circumferential edge of the bushing member 62 comes into contact with the inner circumferential surface of the through-hole 33. Any configuration may be employed as long as the bushing member 62 approaches at least the inner circumferential surface of the through-hole 33. Similar to the case described above, in the contact state illustrated in Figs. 24 (a) and 24(b), the circumferential edge of the bushing member 62 expands outward, so that the circumferential edge of the bushing member 62 approaches or comes into contact with the inner circumferential surface of the through-hole 33. For this reason, it is possible to narrow the gap between the circumferential edge of the bushing member 62 and the inner circumferential surface of the through-hole 33 and infinitely reduce it to zero.

In this manner, by deforming the apex portion 163 of the bushing member 62 outward to approach or come into contact with the inner circumferential surface of the through-hole 33, it is possible to transmit a bearing pressure as indicated by the behavior α of Fig. 16 and immediately apply a load when the load is applied. Therefore, it is possible to suitably exert earthquake performance.

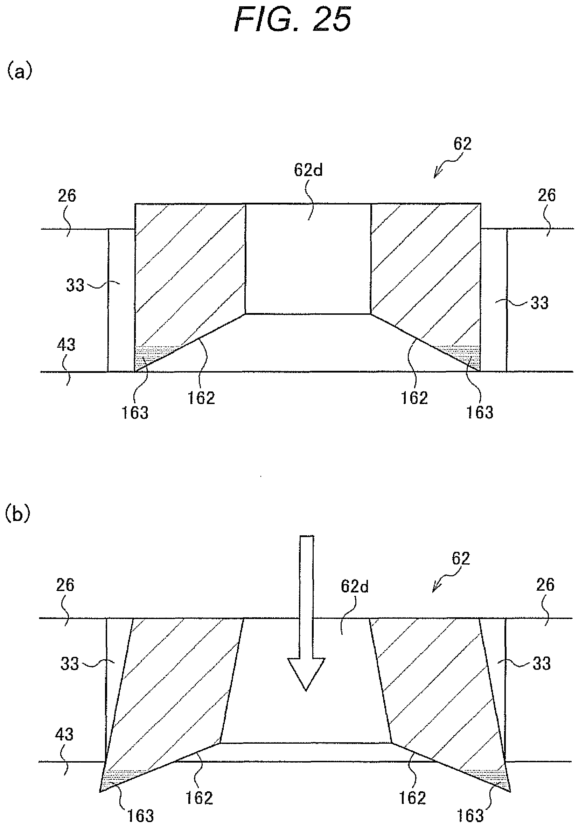

In the configuration of Fig. 25(a), by applying quenching treatment at least to the apex portion 163 of the bushing member 62, the apex portion 163 or the vicinity of the apex portion 163 are hardened relative to the body portion of the bushing member 62. In the following example, a case where the apex portion 163 is hardened will be described by way of example. As a result, when a fastening force between the bolt 63 and the nut 64 is applied as indicated by the arrow direction of Fig. 25 (b), the bushing member 62 is deformed outward without being crushed because the apex portion 163 has high hardness. In contrast, the body portion of the bushing member 62 having hardness lower than that of the apex portion 163 can expand outward when the fastening force indicated by the arrow is applied. In particular, the bushing member 62 may be formed of ductile metal suchas low-yield-point steel, aluminum, copperalloy, leadalloy, tin alloy, beryllium alloy, nickel alloy, zinc alloy, or silver alloy.

Note that the apex portion 163 may be hardened through any method other than the quenching treatment as long as the hardness of the apex portion 163 is higher than the hardness of the body portion of the bushing member 62. For example, the apex portion 163 of the bushing member 62 may be formed of a material different from that of the body portion and harder than the body portion. In this case, the body portion of the bushing member 62 may be formed of any ductile material such as rubber or resin in addition to the ductile metal described above.

In the configuration of Figs. 25(a) and 25(b), it is possible to reduce the gap between the bushing member 62 and the inner circumferential surface of the through-hole 33 using the expanding body portion of the bushing member 62 as well as the apex portion 163. As a result, when a load is applied, it is possible to immediately apply a load as indicated by the behavior α of Fig. 16 and suitably exert earthquake performance.

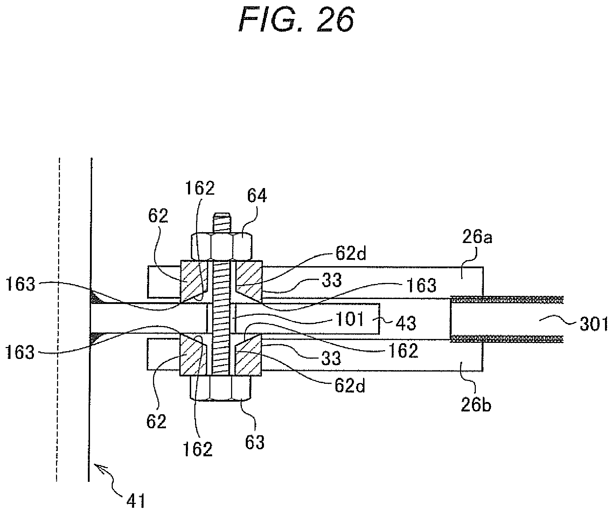

Fig. 26 illustrates a case where the first member 43 is mounted to the column 41 in advance. The second members 26a and 25b are welded to the beam member 301 without being mounted to the column 41. In Fig. 26, like reference numerals denote like elements as in Fig. 22, and they will not be described repeatedly.

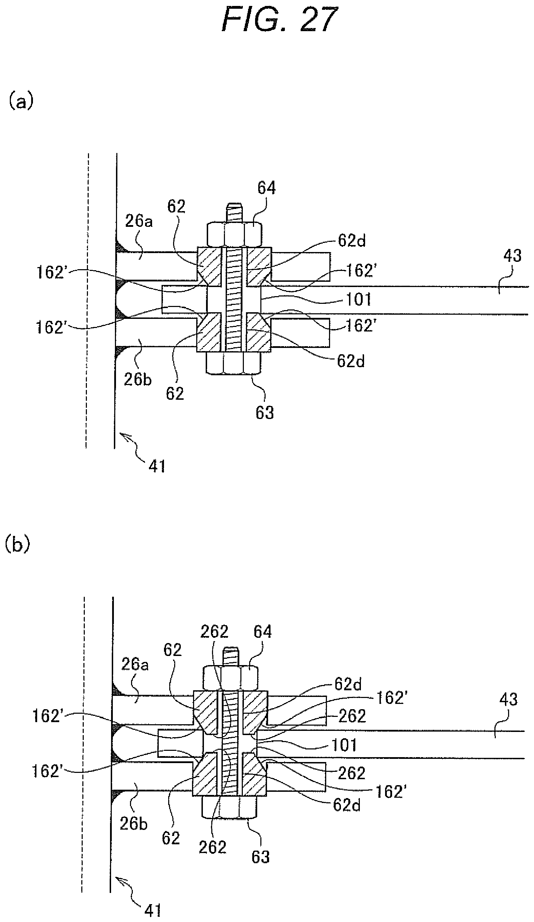

Fig. 27 (a) illustrates still another example. Similarly, in Fig. 27 (a), like reference numerals denote like elements as in Fig. 22, and they will not be described repeatedly.

In the example of Fig. 27(a), the bushing member 62 has a slope surface 162' sloped such that its thickness gradually increases from the circumferential edge toward the through-hole 62d. This slope surface 162' faces the first member 43. That is, the slope surface 162' is not in parallel to the surface of the first member 43. The slope surface 162' has a slope direction reverse to that of the aforementioned slope surface 162. The lower end of the slope surface 162' may be approximately acute in the cross-sectional shape or have a flat shape.

In the configuration of Fig. 27(a), the hole 101 of the first member 43 has a diameter larger than that of the through-hole 62d of the bushing member 62. When a fastening force between the bolt 63 and the nut 64 is applied, the bushing member 62 partially protrudes to the inside of the hole 101 of the first member 43 to form a protrusion 262 as illustrated in Fig. 27 (b) . This protrusion 262 is an area of the bushing member 62 facing the hole 101. By virtue of the aforementioned fastening force, the bushing member 62 is extruded to the inside of the hole 101 to form a convex shape. In particular, since the slope surface 162' is formed, the slope surface 162' abuts on the circumferential edge of the hole 101. In this state, when a fastening force between the bolt 63 and the nut 64 is applied, the slope surface 162' is guided along the circumferential edge of the hole 101, so that a convex shape is formed inside the hole 101, and formation of the protrusion 262 is promoted. In particular, since the bushing member 62 is formed of a ductile material, it is possible to relatively easily implement the protrusion depending on such a fastening force. Note that, similarly, in the configuration of Figs. 27(a) and 27(b), a gap may be formed between the bushing member 62 and the through-hole 33 or not.

Naturally, in this example, a joint configuration of Fig. 19 may also be employed.

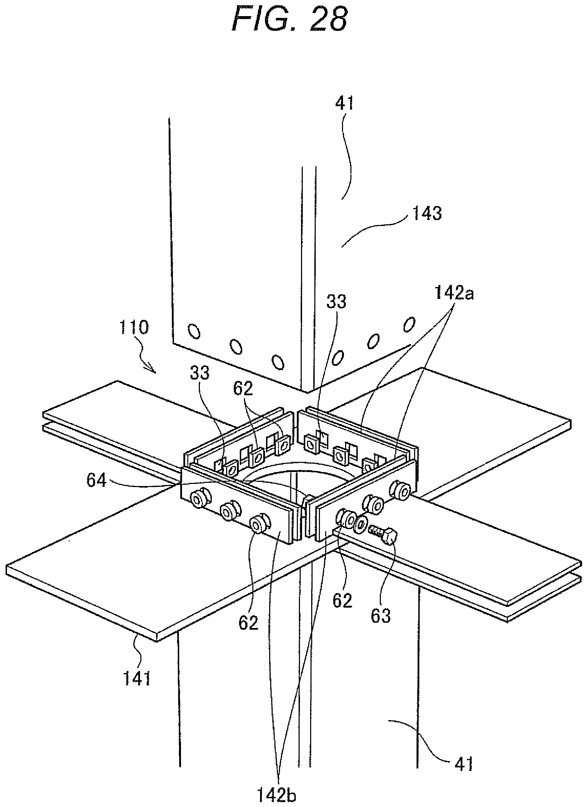

The present invention may also be applied to, for example, the joint structure 110 between the columns 41 as illustrated in Fig. 28. In this joint structure 110 between the columns 41, like reference numerals denote like elements as in the joint structure 100, and they will not be described repeatedly.

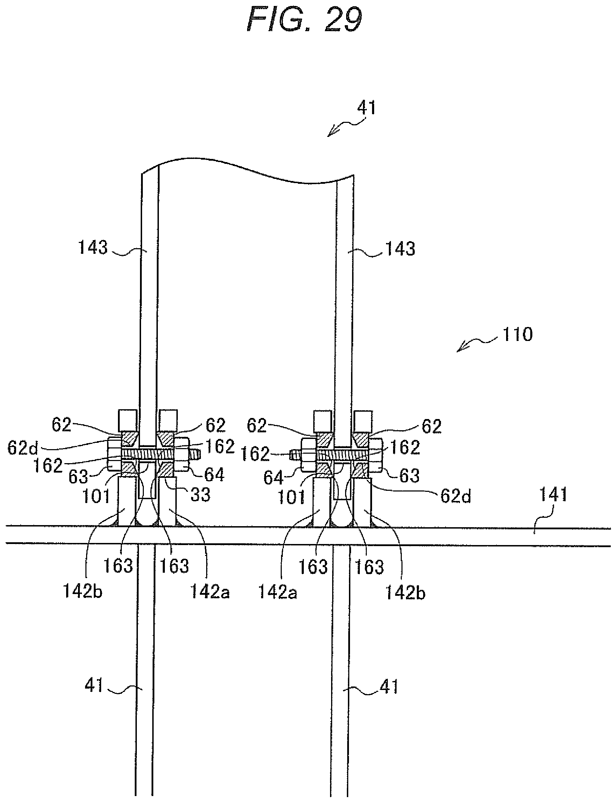

Fig. 29 is an enlarged cross-sectional view illustrating the joint structure 110. The plate 141 installed in the upper end of the lower column 41 is provided for mounting to the flange of the beam or the like. On the upper surface of the plate 141, the second members 142a and 142b extend perpendicularly to the in-plane direction.

The first member 143 is the upper column 41 having a tubular body. In addition to the first member 143, a second member 26b is mounted separately from the first member 143. The first member 143 is interposed between the second members 142a and 142b.

The second members 142a and 142b are provided with through-holes 33. The bushing member 62 is fitted to each of the through-holes 33. Meanwhile, as illustrated in the enlarged perspective view of Fig. 23, the bushing member 62 has a slope surface 162 sloped from a through-hole 62d located in the exact center toward the apex portion 163, and the apex portion 163 is approximately acute in the cross-sectional shape. When the bushing member 62 comes into contact with the first member 143, the apex portion 163 of the bushing member 62 makes a line contact with the first member 143. Meanwhile, in this configuration, there is nearly no gap between the bushing member 62 and the inner circumferential surface of the through-hole 33.

The bolt 63 has a shank inserted into the through-hole 62d of the bushing member 62 and the hole 101 of the first member 143. The nut 64 is screwed to a tip of the bolt 63. By fastening the bolt 63 and the nut 64, a compressive force from the head of the bolt 63 can be used to transmit the compressive force between the head of the bolt 63 and the nut 64.

In this joint structure 110, the first member 143 comes into contact with the apex portion 163 of the bushing member 62. This apex portion 163 is approximately acute in the cross-sectional shape and makes a line contact with the first member 143. For this reason, when a compressive force is applied using the bolt 63, a stress is concentrated on the apex portion 163, and a strong stress is locally applied to the first member 143. Furthermore, the apex portion 163 is depressed to the first member 143. In this state, when a load is applied to a constructional structure, and the beam 42 is depressed to the column 41, stronger friction is applied between the surface of the first member 143 and the apex portion 163 of the bushing member 62 pressed to the first member 143. When a load is applied in response to this friction, the load is absorbed better due to the frictional transmission effect. In addition, the bushing member 62 may have, for example, a rectangular shape, and the through-hole 33 where the bushing member 62 is fitted may have a rectangular shape. As a result, when the bushing member 62 is fitted to the through-hole 33 and is then fixed using the bolt 63, it is possible to prevent the bushing member 62 from turning in vain.

Any one of various configurations described in relation to the joint structure 100 may also be applied to the joint structure 110.

### Reference Signs List

- 26, 142, 93: second member
- 33: through-hole
- 41: column
- 42: beam
- 43, 143, 151: first member
- 44, 302: web
- 62: bushing member
- 63, 153, 171: bolt
- 64, 154, 172: nut
- 71: vibration control wall structure
- 72: wall frame
- 73: damping wall assembly
- 76: wall portion
- 81: column
- 82: beam
- 91: panel
- 92: frame
- 94: elastic adhesive
- 97: fitting portion
- 98: elastic cushioning
- 100, 110, 200: joint structure
- 101: hole
- 111, 156, 157, 173: washer
- 152: bushing member
- 155: disk spring
- 162: slope surface
- 163: apex portion
- 169: curing agent
- 175, 176: bolt hole
- 262: protrusion
- 264: coating material
- 301: beam member
- 401, 402: splice plate
- 410: notch

## Claims

1. An inter-element joint structure comprising:
a first member provided with a hole or a trench;
a second member provided with a through-hole;
a bushing member fitted to the through-hole formed in the second member and fixed to the second member while the bushing member comes into contact with a surface of the first member;
a fastening member including a bolt provided with a shank penetrating at least the bushing member and the hole or the trench of the first member to fasten the bushing member and the first member; and
a washer that is interposed between a head of the bolt and the bushing member and has a diameter larger than that of the bushing member,
wherein the bushing member has a thickness larger than that of the second member, and
the through-hole of the secondmemberhas a circumferential edge loosely fitted between the washer and the first member.

2. The inter-element joint structure according to claim 1, wherein the hole or the trench formed in the first member extends horizontally by a predetermined length.

3. An inter-element joint structure comprising:
a first member provided with a hole;
a second member provided with a through-hole and fixed to a constructional structure in advance of the first member;
a bushing member that is fitted to the through-hole formed in the second member and comes into contact with a surface of the first member; and
a fastening member including a bolt provided with a shank penetrating at least the bushing member and the hole of the first member to fasten the bushing member and the first member,
wherein a relationship "t > α" is satisfied, where "α" denotes a gap between the first and second members, and "t" denotes a thickness of the bushing member.

4. The inter-element joint structure according to claim 3, wherein the first member is interposed between a pair of the second members, and
relationships "αl < t1" and "α2 < t2" are satisfied, where "α1" denotes a gap between the first member and one of the second members, "α2" denotes a gap between the first member and the other second member, "t1" denotes a thickness of the bushing member fitted to the through-hole formed in the one second member, and "t2" denotes a thickness of the bushing member fitted to the through-hole formed in the other second member.

5. The inter-element joint structure according to claim 4, wherein the bushing member fitted to any one of the through-holes of the pair of second members is provided with a female thread that can be screwed to the bolt.

6. An inter-element joint structure comprising:
a first member provided with a first through-hole;
a second member provided with a second through-hole and fixed to a constructional structure in advance of the first member;
a first bushing member fitted to the first through-hole formed in the first member;
a second bushing member that is fitted to the second through-hole of the second member and comes into contact with a surface of the first bushing member; and
a fastening member including a bolt provided with a shank penetrating at least each hole of the first and second bushing members to fasten the first and second bushing members.

7. An inter-element joint structure comprising:
a first member provided with a hole;
a second member provided with a through-hole and fixed to a constructional structure in advance of the first member;
a bushing member that has a diameter smaller than that of the through-hole formed in the second member, is fitted to the through-hole of the second member, and comes into contact with a surface of the first member; and
a fastening member including a bolt provided with a shank penetrating at least the bushing member and a hole of the first member to fasten the bushing member and the first member,
wherein a circumferential edge of the bushing member expands outward by the fastening force of the fastening member so as to approach or come into contact with an inner circumferential surface of the through-hole.

8. An inter-element joint structure comprising:
a second member provided with a through-hole;
a first member provided with a hole and fixed to a constructional structure in advance of the second member;
a bushing member that has a diameter smaller than that of the through-hole formed in the second member, is fitted to the through-hole, and comes into contact with a surface of the first member; and
a fastening member including a bolt provided with a shank penetrating at least the bushing member and a hole of the first member to fasten the bushing member and the first member,
wherein a circumferential edge of the bushing member expands outward by the fastening force of the fastening member so as to approach or come into contact with an inner circumferential surface of the through-hole.

9. The inter-element joint structure according to claim 7 or 8, wherein the bushing member includes:
a first layer coming into contact with a surface of the first member, and
a second layer interposed between the first layer and the fastening member, formed of a material having ductility higher than that of the first layer, and provided with a circumferential edge expanded outward by virtue of a fastening force of the fastening member.

10. The inter-element joint structure according to any one of claims 7 to 9, wherein the hole of the first member has a diameter larger than that of the hole of the bushing member, and
the bushing member protrudes to the inside of the hole of the first member by the fastening force of the fasteningmember.

11. The inter-element joint structure according to claim 7 or 8, wherein the bushing member is sloped such that a thickness of the bushing member increases from a hole where the shank of the bolt penetrates to the circumferential edge, or the thickness of the bushing member increases from the circumferential edge to the hole where the shank of the bolt penetrates.
